# EUROPÄISCHE PATENTSCHRIFT

(11) **EP 0 370 500 B1**
(45) Veröffentlichungstag und Bekanntmachung des Hinweises auf die Patenterteilung: **05.04.1995**
(21) Anmeldenummer: 89121598.0
(22) Anmeldetag: 23.11.1989
(51) Int. Cl.: H04N 5/44

(54) **Schaltungsanordnung zur Umsteuerung zwischen verschiedenen Flimmerreduktionsverfahren in einem Fernsehempfänger**
Circuitry for selecting between different methods of flicker reduction in a television receiver
Dispositif de circuit de sélection entre différentes méthodes de réduction du papillotement dans un récepteur de télévision

(30) Priorität: 23.11.1988 DE 3839437
(43) Veröffentlichungstag der Anmeldung: 30.05.1990
(73) Patentinhaber: Grundig E.M.V. Elektro-Mechanische Versuchsanstalt Max Grundig GmbH & Co. KG, 90762 Fürth (DE)
(72) Erfinder: Kays, Rüdiger, Dr.-Ing. GRUNDIG E.M.V Max Grundig, D-8510 Fürth/Bay (DE)

(56) Entgegenhaltungen:
- DE-A- 2 937 284
- GB-A- 2 092 858
- US-A- 4 641 188
- PROCEEDINGS OF THE SECOND INTERNATIONAL WORKSHOP ON SIGNAL PROCESSING OF HDTV, L'aquila, 29. Februar - 2. März 1988, Seiten 535-542; P. STAMMNITZ et al.: "A digital HDTV experimental system"

## Beschreibung

Die Erfindung betrifft eine Schaltungsanordnung zur Umsteuerung zwischen verschiedenen Flimmerreduktionsverfahren in einem Fernsehempfänger nach dem Oberbegriff des Patentanspruchs 1.

Zur Verbesserung der Bildqualität werden im zunehmenden Maße in Fernsehempfängern Bildspeicher eingesetzt. Der Bildspeicher wird dabei nicht nur zur Unterdrückung von Rausch- oder Cross-Colour-Störungen oder zur Funktionserweiterung (z.B. Bild im Bild) genutzt, sondern auch zur Reduktion systembedingter Flimmerstörungen. Zu den Flimmerstörungen zählen das Zeilenflimmern, Zeilenwandern, Kantenflackern und Großflächenflackern.

Zur Reduzierung des Großflächenflackerns wurde das Zeilensprungverfahren eingeführt, bei dem ein Vollbild in zwei Teilbilder aufgeteilt wird, wobei das eine Teilbild alle ungeradzahligen und das andere Teilbild alle geradzahligen Zeilen enthält.

Eine weitere Reduktion der Flimmerstörungen, insbesondere des Großflächenflackerns, läßt sich durch eine Abtastkonversion, d.h. Bildspeicher mit geeigneter Steuerung, erreichen. Es sind eine Reihe von verschiedenen Flimmerreduktionsverfahren mit 100-Hz-Teilbildfrequenz unter Beibehaltung des Zeilensprungverfahrens für Fernsehempfänger mit Bildspeicher bekannt. Die Flimmerreduktionsverfahren haben hinsichtlich vertikaler Auflösung und Bewegungswiedergabe sehr unterschiedliche Eigenschaften und sind im Vergleich zueinander beispielsweise in den Zeitschriften "Fernseh- und Kino-Technik, 40. Jahrgang, Nr. 4/1986, Seiten 134 bis 139" oder "Rundfunktechnische Mitteilungen, Jahrgang 31 (1987), Heft 2, Seiten 75 bis 82" ausführlich beschrieben. Diese Vergleichsbetrachtungen zeigen deutlich, daß für eine wirkungsvolle Beseitigung von Zeilen-Flimmerstörungen und damit eine gute Bildqualität nur dann erreichbar ist, wenn bewegungsadaptiv zwischen den verschiedenen Flimmerreduktionsverfahren umgesteuert wird.

Eine bewegungsadaptive Umsteuerung unter Vermeidung von Bewegungsartefakten, üblicherweise für jeden Bildpunkt, ist im allgemeinen recht aufwendig, wobei die Umschaltung zwischen hochauflösender Halbbildwiedergabefolge und bewegungsrichtiger Halbbildwiedergabefolge bereits bei geringen Bewegungsgeschwindigkeiten vorzunehmen ist. Die Signalverarbeitung ist im Vergleich dabei ähnlich aufwendig jener Signalverarbeitung, bei der eine 100-Hz-Vollbildwiedergabe erfolgt. Aus einer 100-Hz-Vollbildwiedergabe folgt eine Horizontalfrequenz von 62,5 kHz mit entsprechend hohem Schaltungsaufwand bei der Signalverarbeitung und Bildwiedergabe.

Aus der DE-A1 32 03 978 in Verbindung mit der hierzu korrespondierenden GB-A- 2 092 858 ist ein Flimmerreduktionsverfahren bekannt, bei dem das zwischengespeicherte *Halb*bild mit einer gegenüber der normgemäßen Bildfolgefrequenz höheren Bildfolgefrequenz bzw. Zeilenfrequenz ausgelesen und im Zeilensprungverfahren wiedergegeben wird. Mittels eines Bewegungsdetektors oder Umrißdetektors werden Bewegungen zwischen den *Halb*bildern erkannt und, falls eine Bewegung im Bild auftritt, wird eine Umsteuerung von der Wiedergabefolge A-B-A-B auf eine Wiedergabefolge A-A-B-B bzw. bei vertikaler Interpolation auf eine Wiedergabefolge A-A`-B`-B vorgenommen.

Betrachtet man die Fernsehprogramme, so zeigt sich, daß ein großer Anteil der Fernsehprogramme aus Filmproduktionen besteht. Dieser Anteil kann ebenso wie z.B. Grafiken, Tabellen, Teletext (Videotext) und Testbilder, mit hoher Bildqualität durch die Wiedergabefolge A-B-A-B dargestellt werden.

Aus der DE-OS 36 25 932 ist ein Bildwiedergabesystem mit fortlaufender Abtastung bekannt, bei dem sendeseitig ein Umsteuersignal zur Umsteuerung zwischen hochauflösendem und bewegungsrichtigem Flimmerreduktionsverfahren erzeugt und zum Fernsehempfänger übertragen wird. Bei einem Kinofilm werden die beiden Teilbilder aus demselben Vollbild erzeugt, d.h. gleiche Bewegungsphasen, so daß das Umsteuersignal in Abhängigkeit davon erzeugt wird, ob ein Kinofilm oder ein elektronisch produziertes Fernsehprogramm gesendet wird. Im Fernsehempfänger wird das Umsteuersignal ausgewertet und zur Umschaltung zwischen hochauflösendem Flimmerreduktionsverfahren bei einem Kinofilm und bewegungsrichtigem Flimmerreduktionsverfahren bei elektronischer Produktion herangezogen.

Ein solches Bildwiedergabesystem erfordert nicht nur entsprechende Einrichtungen im Fernsehempfänger, sondern zusätzlich auch entsprechende Einrichtungen auf der Sendeseite zur Erzeugung und Übertragung des Umsteuersignals. Zudem ist dem aus der DE-OS 36 25 932 bekannten Bildwiedergabesystem kein Hinweis darauf zu entnehmen, in welcher Weise die im Fernsehempfänger angeordneten Einrichtungen des Bildwiedergabesystems abgeändert werden müssen, wenn das Fernsehbild nach einer Zeilensprungnorm wiedergegeben werden soll.

Der Erfindung liegt die Aufgabe zugrunde, eine Schaltungsanordnung zur Umsteuerung zwischen verschiedenen Flimmerreduktionsverfahren derart anzugeben, daß für eine Vielzahl von empfangenen Fernsehprogrammen bereits mit geringem Schaltungsaufwand eine gute Bildqualität erzielt wird. Diese Aufgabe wird von einer gattungsgemäßen Schaltungsanordnung durch die kennzeichnenden Merkmale des Patentanspruchs 1 gelöst.

Bei der erfindungsgemäßen Schaltungsanordnung wird auf überraschend einfache Art und Weise die Erkenntnis, daß ein sehr großer Anteil des gesendeten Fernsehprogramms aus Filmproduktionen besteht, dazu benutzt, um bereits mit geringem Schaltungsaufwand die Bildqualität zu verbessern. Der Bewegungsphasendetektor ermittelt lediglich, ob die Bewegungsphasen für erstes und zweites Halbbild gleich sind und in Abhängigkeit davon erfolgt die Umsteuerung zwischen den Flimmerreduktionsverfahren für jeweils mindestens ein Halbbild. Durch den Vergleich der Bewegungsphasen von ersten und zweiten Halbbild ist eine klare Trennung zwischen den verschiedenen Flimmerreduktionsverfahren möglich, so daß Umsteuerartefakte vermieden werden können.

Ist gemäß der Ausführungsform nach Patentanspruch 3, neben dem Bewegungsphasendetektor zusätzlich ein an sich bekannter Bewegungsdetektor im Fernsehempfänger angeordnet, so ist beim Erkennen von nicht gleichen Bewegungsphasen durch den Bewegungsphasendetektor mittels des Bewegungsdetektor eine bewegungsadaptive Umsteuerung zwischen den verschiedenen Flimmerreduktionsverfahren möglich.

Die Schaltungsanordnung gemäß Patentanspruch 4 weist den Vorteil auf, daß - durch die Kombination der beiden Umsteuerungssignale - die Signalverarbeitung durch kurzzeitige Störungen im Nachrichtenübertragungskanal nicht beeinflußt wird. Beispielsweise kann die Kombination so ausgelegt werden, daß das sendeseitige Umsteuerungssignal die höhere Priorität aufweist und daß bei fehlendem sendeseitigen Umsteuerungssignal das im Fernsehempfänger erzeugte Umsteuerungssignal bei der Signalverarbeitung herangezogen wird.

Gemäß Patentanspruch 5 wird zur vereinfachten Chrominanzverarbeitung nur ein Halbbildspeicher benötigt. Eine denkbare Wiedergabefolge ist dabei z.B. die Wiedergabefolge A-A′-B′-B. Bei dieser Wiedergabefolge werden zur Reduzierung des Schaltungsaufwandes die Eigenschaften des visuellen Gesichtssinns genutzt.

Die Erfindung wird im folgenden anhand in der Zeichnung dargestellter Ausführungsformen näher beschrieben und erläutert.

Es zeigt:
- Fig. 1: das Blockschaltbild der erfindungsgemäßen Schaltungsanordnung und
- Fig. 2: eine Ausführungsform für einen Bewegungsphasendetektor.

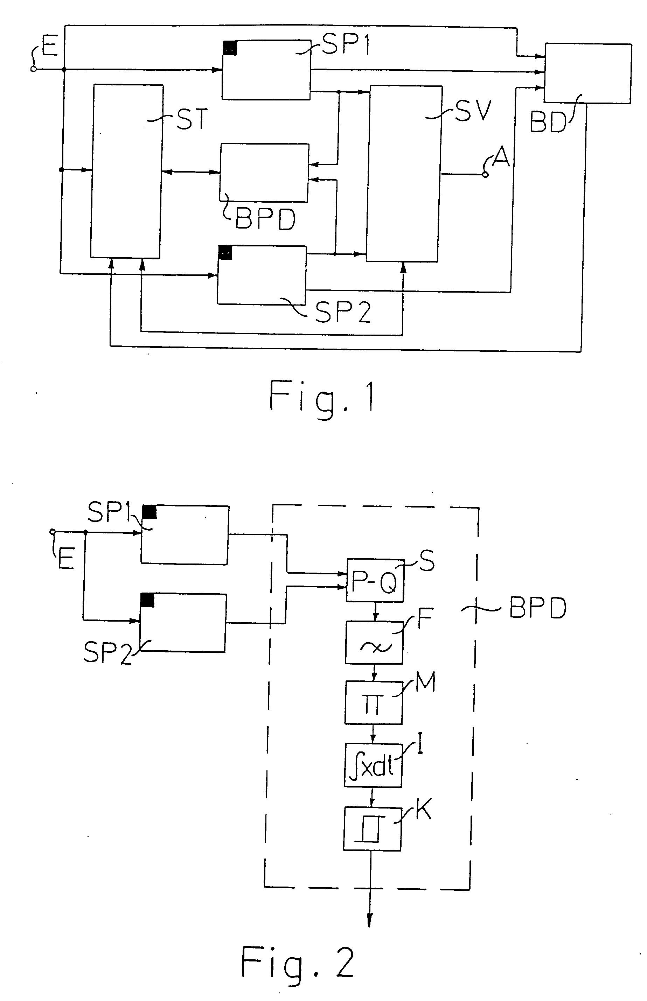

Fig. 1 zeigt das Blockschaltbild einer Schaltungsanordnung zum Umsteuern zwischen verschiedenen Flimmerreduktionsverfahren in einem Fernsehempfänger, bei dem die empfangenen und am Eingang E anliegenden Fernsehsignale zwischengespeichert, einer Signalverarbeitung unterzogen und die am Ausgang A anliegenden, verarbeiteten Signale mit einer gegenüber der Norm höheren Bildfolgefrequenz und Zeilenfrequenz nach einem Zeilensprungverfahren wiedergegeben werden. Im Fernsehempfänger sind zwei Halbbildspeicher SP1, SP2 und ein mit diesen verbundener Bewegungsphasendetektor BPD angeordnet. Mit dem Bewegungsphasendetektor BPD sind eine Steuereinrichtung ST und eine Signalverarbeitungsschaltung SV verbunden, welche - in Abhängigkeit der vom Bewegungsphasendetektor BPD ermittelten Bewegungsphase zwischen erstem und zweitem Halbbild - für mindestens ein im Halbbildspeicher SP1 zwischengespeichertes Halbbild zwischen hochauflösendem und bewegungsrichtigem Flimmerreduktionsverfahren umsteuern und mit einer 100-Hz-Halbbildwiedergabefolge wiedergeben. Die 100-Hz-Halbbildwiedergabefolge A-B-A-B liefert eine hohe vertikale Auflösung und die 100-Hz-Halbbildwiedergabefolge A-A′-B′-B weist den Vorteil einer bewegungsrichtigen Wiedergabe auf.

Bei der in Fig. 1 dargestellten Ausführungsform weisen die beiden Halbbildspeicher SP1, SP2 zusätzlich einen zweiten Ausgang auf, an welchem das normgemäße Fernsehsignal mit einer 50-Hz-Halbbildfolge auftritt. Mit diesen zweiten Ausgängen und dem Eingang der beiden Halbbildspeicher SP1, SP2 ist ein an sich bekannter Bewegungsdetektor BD verbunden, welcher - beim Erkennen von nicht gleichen Bewegungsphasen durch den Bewegungsphasendetektor BPD - die Umsteuerung zwischen den verschiedenen Flimmerreduktionsverfahren vornimmt. Wird zusätzlich sendeseitig ein Steuersignal zur Umsteuerung zwischen den verschiedenen Flimmerreduktionsverfahren erzeugt, so kann dieses von der im Fernsehempfänger angeordneten Steuereinrichtung ST zusätzlich ausgewertet werden. Die Übertragung dieses zusätzlichen Umsteuerungssignals kann beispielsweise neben dem Fernsehsignal in der Vertikal-Austastlücke oder Horizontal-Austastlücke erfolgen. Dieses Umsteuerungssignal enthält eine Information darüber, ob ein Kinofilm oder ein elektronisch produziertes Fernsehprogramm gesendet wird. Beispielsweise kann eine Voreinstellung der Steuereinrichtung ST auf ein hochauflösendes oder bewegungsrichtiges Flimmerreduktionsverfahren vorgenommen werden (höhere Priorität des im Fernsehempfänger erzeugten Umsteuerungssignals). Durch die Kombination von Bewegungsphasendetektor BPD und Bewegungsdetektor BD, bzw. von Bewegungsphasendetektor BPD mit dem zusätzlichen Steuersignal, kann der Umsteuerungsvorgang noch sicherer erfolgen.

Erfolgt die Signalverarbeitung im Fernsehempfänger für Luminanz und Chrominanz getrennt, so kann die Steuereinrichtung ST bei der Durchführung der Steueraufgaben entlastet werden, ohne daß hiermit ein Qualitätsverlust im dargestellten Fernsehsignal verbunden ist. Diese Reduktion des Verarbeitungsaufwandes wird dadurch ermöglicht, da das Auflösungsvermögen des menschlichen Auges für Chrominanz geringer als für Luminanz ist. Es ist deshalb nicht erforderlich, eine Umsteuerung auf die hochauflösende Wiedergabefolge vorzunehmen, sondern es kann die bewegungsrichtige Wiedergabefolge gewählt werden. Eine mögliche 100-Hz-Wiedergabefolge ist A-A′-B′-B; dabei wird nur ein Halbbildspeicher benötigt.

Fig. 2 zeigt eine Ausführungsform für einen Bewegungsphasendetektor BPD. Das Eingangsvideosignal am Eingang E kann beispielsweise ein Komposit-Signal oder das Luminanzsignal Y oder ein Farbauszug R, G oder B sein. In den beiden Halbbildspeichern SP1, SP2 wird das zugeführte Eingangsvideosignal jeweils um die Dauer eines Halbbildes verzögert und in einer mit den beiden Halbbildspeichern SP1, SP2 verbundenen Subtrahierschaltung S wird die Differenz aus aufeinanderfolgenden Halbbildern berechnet.

Das so erhaltene Differenzsignal liefert in manchen Fällen noch keine endgültige Aussage über Bewegungen im Bild, so daß eine Filterung erforderlich ist, um einerseits Bilddifferenzen durch Rauschen und andererseits durch hohe vertikale Ortsfrequenzen des Vollbildes zu unterdrücken. Hierzu ist mit der Subtrahierschaltung S ein Filter F verbunden, in dem mindestens eine Vertikalfilterung des Differenzsignals vorgenommen wird. Wird zusätzlich eine Horizontalfilterung durchgeführt, so kann die Detektionsqualität weiter verbessert werden. Die im Filter F vorgenommene Vertikal- bzw. Horizontalfilterung ist vorzugsweise eine Tiefpaßfilterung mit niedriger Grenzfrequenz.

Umfangreiche Untersuchungen bestätigten, daß für die weitere Auswertung es nicht erforderlich ist, alle gefilterten Bildpunkte heranzuziehen. Es genügt beispielsweise jeden achten gefilterten Bildpunkt bei der nachfolgenden Verarbeitung in einer mit dem Filter F verbundenen Multiplikationsschaltung M zu berücksichtigen.

In der Multiplikationsschaltung M wird eine nichtlineare Gewichtung des Filterausgangssignals durchgeführt. Dabei wird eine Betragsbildung der Differenz und für geringe Differenzen das Nullsetzen vorgenommen.

Mit der Multiplikationsschaltung M ist ein Integrator I verbunden, welcher die Differenzen während der Dauer eines Vollbildes aufsummiert. Bei dieser Verarbeitung werden nur die Differenzen des zweiten zum ersten Halbbild genutzt. Mit dem Integrator I ist ein Komparator K verbunden, welcher das Summensignal am Ausgang des Integrators I mit einem vorgebbaren Schwellenwert vergleicht. Wird der Schwellenwert überschritten, so steht am Ausgang des Komparators K das Umsteuersignal mit einem bestimmten logischen Kennzustand an.

Eine weitere, in der Zeichnung nicht dargestellte Ausführungsform ist dadurch gekennzeichnet, daß das Filter F vor der Subtrahierschaltung S angeordnet ist. Dadurch kann der Schaltungsaufwand weiter reduziert werden.

Weist der Komparator K hinsichtlich dem Schwellenwert eine Schalt-Hysterese auf, so kann eine weitere Verbesserung in der Detektionssicherheit des Bewegungsphasendetektors BPD erzielt werden.

Weiterhin kann zusätzlich eine zeitliche Filterung derart vorgenommen werden, daß das Umsteuerungssignal des Komparators K in mehreren aufeinanderfolgenden Vollbildern auftreten muß, bevor der Bewegungsphasendetektor BPD auf "Bewegung vorhanden" erkennt. Umgekehrt muß dann für mehrere aufeinanderfolgende Vollbilder der Bewegungsphasendetektor BPD "keine Bewegung vorhanden" detektieren, bevor dieser ein entsprechendes Umsteuerungssignal erzeugt.

## Patentansprüche

1. Schaltungsanordnung zur Umsteuerung zwischen verschiedenen Flimmerreduktionsverfahren in einem Femsehempfänger, bei dem die empfangenen Fernsehsignale in Halbbildspeichern zwischengespeichert werden, daß ein mit diesen Halbbildspeichern verbundener Bewegungsphasendetektor sowie eine Steuereinrichtung verbunden ist, welche in Abhängigkeit der vom Bewegungsphasendetektor ermittelten Bewegungsphase zwischen hochauflösendem (A-B-A-B) und bewegungsrichtigem (A-A-B-B) Flimmerreduktionsverfahren mit 100-Hz-Halbbildwiedergabefolge umsteuert, wodurch die empfangenen Fernsehsignale mit einer gegenüber der Norm höheren Bildfolgefrequenz und Zeilenfrequenz nach einem Zeilensprungverfahren wiedergegeben werden, **dadurch gekennzeichnet**, daß im Femsehempfänger nur zwei Halbbildspeicher ( SP1, SP2 ) angeordnet und der betreffende Bewegungsphasendetektor (BPD) mit diesen Halbbildspeichem (SP1, SP2) verbunden ist, und daß die Steuereinrichtung (ST) in Abhängigkeit der vom Bewegungsphasendetektor (BPD) ermittelten Bewegungsphase von erstem und zweitem Halbbild für mindestens ein zwischengespeichertes Halbbild zwischen dem hochauflösenden und bewegungsrichtigen Flimmerreduktionsverfahren umsteuert.

2. Schaltungsanordnung nach Anspruch 1, **dadurch gekennzeichnet**, daß der Bewegungsphasendetektor (BPD) eine mit dem Ausgang der beiden Halbbildspeicher (SP1, SP2) verbundene Subtrahierschaltung (S) aufweist, daß mit der Subtrahierschaltung (S) ein Filter (F) verbunden ist, an dessen Ausgang eine Multiplikationsschaltung (M) zur nichtlinearen Gewichtung des Filterausgangsignals angeschlossen ist, daß mit der Multiplikationsschaltung (M) ein Integrator (I) verbunden ist, welcher nur während der Dauer eines Halbbilds die gewichteten Filterausgangssignale summiert und daß ein mit dem Integrator (I) verbundener Komparator (K) das Summensignal am Ausgang des Integrators (I) mit einem vorgebbaren Schwellenwert vergleicht.

3. Schaltungsanordnung nach Anspruch 1, **dadurch gekennzeichnet**, daß die beiden Halbbildspeicher (SP1, SP2) zusätzlich einen zweiten Ausgang aufweisen, an welchem das normgemäße Fernsehsignal mit 50-Hz-Halbbildfolge auftritt, und daß beim Erkennen von nicht gleichen Bewegungsphasen durch den Bewegungsphasendetektor (BPD) mittels eines mit diesen zweiten Ausgängen und dem Eingang der beiden Halbbildspeicher (SP1, SP2) verbundenen Bewegungsdetektors (BD) die Umsteuerung zwischen den verschiedenen Flimmerreduktionsverfahren vorgenommen wird.

4. Schaltungsanordnung nach Anspruch 1, **dadurch gekennzeichnet**, daß sendeseitig ein Steuersignal zur Umsteuerung zwischen den verschiedenen Flimmerreduktionsverfahren erzeugt wird, welches von der im Fernsehempfänger angeordneten Steuereinrichtung (ST) zusätzlich ausgewertet wird.

5. Schaltungsanordnung nach Anspruch 1, **dadurch gekennzeichnet**, daß im Fernsehempfänger die Signalverarbeitung für Luminanz und Chrominanz getrennt erfolgt, wobei zur Chrominanzverarbeitung nur ein Halbbildspeicher benötigt wird.

## Claims

1. Circuit arrangement for switching between various flicker reduction methods in a television receiver, in which the received television signals are temporarily stored in field buffers, in that a motion phase detector connected to these field buffers and a control device is connected which, in dependence on the motion phase determined by the motion phase detector, switches between high-resolution (A-B-A-B) and motion-correct (A-A-B-B) flicker reduction method at a 100-Hz field repetition rate, as a result of which the received television signals are reproduced with a frame repetition rate and line rate, which are higher compared with the standard, according to a line interlace method, characterized in that only two field buffers (SP1, SP2) are arranged in the television receiver and the relevant motion phase detector (BPD) is connected to these field buffers (SP1, SP2), and in that the control device (ST) switches between the high-resolution and motion-correct flicker reduction method in dependence on the motion phase of the first and second field determined by the motion phase detector (BPD) for at least one temporarily stored field.

2. Circuit arrangement according to Claim 1, characterized in that the motion phase detector (BPD) exhibits a subtracting circuit (S) connected to the output of the two field buffers (SP1, SP2), in that the subtracting circuit (S) is connected to a filter (F) to the output of which a multiplication circuit (M) for the non-linear weighting of the filter output signal is connected, in that the multiplication circuit (M) is connected to an integrator (I) which adds together the weighted filter output signals only during the period of one field, and in that a comparator (K) connected to the integrator (I) compares the aggregate signal at the output of the integrator (I) with a predeterminable threshold value.

3. Circuit arrangement according to Claim 1, characterized in that the two field buffers (SP1, SP2) additionally exhibit a second output at which the standard television signal with a 50-Hz field repetition rate occurs, and in that, when unequal motion phases are detected by the motion phase detector (BPD), the switching between the various flicker reduction methods is carried out by means of a motion detector (BD) connected to these second outputs and to the input of the two field buffers (SP1, SP2).

4. Circuit arrangement according to Claim 1, characterized in that, at the transmitting end, a control signal for switching between the various flicker reduction methods is generated which is additionally evaluated by the control device (ST) arranged in the television receiver.

5. Circuit arrangement according to Claim 1, characterized in that the signal processing for luminance and chrominance occurs separately in the television receiver, only one field buffer being needed for processing chrominance.

## Revendications

1. Montage pour exécuter une commutation entre différents procédés de réduction du papillottement dans un récepteur de télévision, selon lequel les signaux de télévision reçus sont mémorisés dans des mémoires de trames, qu'il est prévu un détecteur de phases de déplacement, qui est relié à ces mémoires de trames, ainsi qu'un dispositif de commande, qui, en fonction de la phase de déplacement déterminée par le détecteur de phase de déplacement, effectue une commutation entre un procédé de réduction du papillottement (A-B-A-B) à haute résolution et un procédé de résolution du papillottement (A-A-B-B) correct du point de vue du déplacement, avec une fréquence de répétition de trames de 100 Hz, ce qui a pour effet que les signaux de télévision reçus sont reproduits avec une fréquence d'images et une fréquence de lignes qui sont supérieures à la norme, conformément à un procédé à saut de ligne, caractérisé en ce que seulement deux mémoires de trames (SP1,SP2) sont disposées dans le récepteur de télévision et que le détecteur considéré de phase de déplacement (BPD) est relié à ces mémoires de trames (SP1, SP2), et que le dispositif de commande (SP) réalise une commutation entre le procédé de réduction du papillottement à résolution élevé et le procédé de réduction du papillot tement correct du point de vue du déplacement en fonction de la phase de déplacement, déterminée par le détecteur de phase de déplacement (BPD), de la première à la seconde trame pour au moins une trame mémorisée temporairement.

2. Montage selon la revendication 1, caractérisé en ce que le détecteur de phases de déplacement (BPD) possède un circuit soustracteur (PS) relié à la sortie des deux mémoires de trames (SP1, SP2), qu'au circuit soustracteur (S) est raccordé un filtre (F), à la sortie duquel est raccordé un circuit multiplicateur (M) servant à réaliser une pondération non linéaire du signal de sortie du filtre, qu'au circuit multiplicateur (M) est relié un intégrateur (I), qui effectue la sommation des signaux de sortie du filtre pondérés, uniquement pendant la durée d'une trame et qu'un comparateur (K), relié à l'intégrateur (I), compare le signal somme présent à la sortie de l'intégrateur (I) à une valeur de seuil pouvant être prédéterminée.

3. Montage selon la revendication 1, caractérisé en ce que les deux mémoires de trames (SPl,SP2) possèdent en outre une seconde sortie, sur laquelle apparaît le signal de télévision normalisé avec une fréquence de trames de 50 Hz, et que lors de l'identification de phases de déplacement non identiques par le détecteur de phases de déplacement (BPD) au moyen d'un détecteur de déplacement (BD) relié à ces secondes sorties et à l'entrée des deux mémoires de trames (SP1,SP2), la commutation est effectuée entre les différents procédés de réduction du papillottement.

4. Montage selon la revendication 1, caractérisé en ce que sur le côté émission est produit un signal de commande servant à réaliser la commutation entre les différents procédés de réduction du papillottement et qui est evalué en supplément par le dispositif de commande (ST) disposé dans le récepteur de télévision.

5. Montage selon la revendication 1, caractérisé en ce que le traitement des signaux pour la luminance et la chrominance est effectué séparément dans le récepteur de télévision, seule une mémoire de trames étant nécessaire pour le traitement du signal de chrominance.
